# EUROPÄISCHE PATENTANMELDUNG

(11) **EP 1 653 305 A2**
(43) Veröffentlichungstag der Anmeldung: **03.05.2006**
(21) Anmeldenummer: 05023151.3
(22) Anmeldetag: 24.10.2005
(51) Int. Cl.: G05B 19/042

(54) **Modulares Feldgerät für die Automatisierungstechnik**

(30) Priorität: 28.10.2004 DE 102004052490
(71) Anmelder: ENDRESS + HAUSER WETZER GmbH + Co. KG, D-87484 Nesselwang (DE)
(72) Erfinder: Konrad, Michael, 87459 Pfronten (DE); Pöllath, Rainer, 87494 Rückholz (DE); Wöhrle, Markus, 87637 Eisenberg (DE)
(74) Vertreter: Andres, Angelika Maria

(57) **Zusammenfassung**

Bei einem modularen Feldgerät für die Automatisierungstechnik mit einem Hauptmodul, dass zur Signalerzeugung und/oder Signalverarbeitung dient und das mehrere Signalein-/bzw. Signalausgänge In1-InN bzw. Out1-OutN für interne Signale aufweist, sind diese Signalein-/bzw. Signalausgänge mit austauschbaren Modulen D1 - DN bzw. D1'-DN' verbunden, die Anschlüsse für externe Signale aufweisen. In den Modulen D1 - DN bzw. D1' - DN' sind jeweils elektrische Begrenzermittel für die externen Signale vorgesehen, die als Barrieren gemäß einer vorgegebenen Zündschutzart ausgelegt sind. Durch den modularen Aufbau erhält man ein sehr flexibles Feldgerät, das einer vorgegebenen Zündschutzart entspricht.

## Beschreibung

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Zur Beeinflussung von Prozessvariablen dienen Aktoren, die z. B. als Ventile den Durchfluss einer Flüssigkeit in einem Rohrleitungsabschnitt oder als Pumpen den Füllstand in einem Behälter ändern können.

Als Feldgeräte werden im Prinzip alle Geräte bezeichnet, die an einer Prozesskomponente eingesetzt werden und die prozessrelevante Informationen liefern, verarbeiten oder speichern.

Eine Vielzahl solcher Feldgeräte wird von der Firma Endress+Hauser hergestellt und vertrieben.

In der Regel sind Feldgeräte in modernen Industrieanlagen mit übergeordneten Einheiten (Leitsystemen oder Steuereinheiten) verbunden. Die Daten werden vom Feldgerät entweder analog oder digital (z. B. 4-20 mA, HART, Profibus, Foundation Fieldbus etc.) zu diesen Einheiten übertragen. Insbesondere bei Bussystemen dienen die übergeordneten Einheiten zur Prozesssteuerung, Prozessvisualisierung, Prozessüberwachung sowie zur Inbetriebnahme der Feldgeräte.

Feldgeräte werden häufig insbesondere in Chemie- bzw. Öl- und Gasanlagen in explosionsgefährdeten Bereichen (Ex-Bereichen) eingesetzt und unterliegen deshalb besonderen Vorschriften. Zu nennen ist hier unter anderem die Europäische Norm EN50020 für die Zündschutzart Eigensicherheit, die eine Energiebegrenzung bei den eingesetzten elektrischen Schaltungen vorsieht. Die Europäische Norm EN50019 "Erhöhte Sicherheit" schreibt konstruktive Maßnahmen für den Explosionsschutz vor.

Für die Zulassung der Feldgeräte für den Ex-Bereich sind aufwendige Zulassungsverfahren notwendig. Diese Zulassungsverfahren sind langwierig, teuer und sie verzögern die Markteinführung neuer Produkte.

In der Regel werden bisher Feldgeräte, die für den Ex-Bereich bestimmt sind immer als Einheit betrachtet. D.h. für jedes Gerät wird eine spezielle Ex-Version entwickelt. Dies gilt auch für unterschiedliche Varianten eines Gerätetyps.

Für Feldgerätehersteller ist es deshalb äußerst aufwendig, für ihre Geräte und insbesondere für alle Varianten eines Gerätetyps Produkte mit einer Ex-Zulassung zu entwickeln und zu produzieren.

Die Aufgabe der Erfindung besteht darin, ein Feldgerät anzugeben, das in einfacher Weise unterschiedliche Varianten eines Gerätetyps, die den Zulassungskriterien für Explosionsschutz genügen, ermöglicht..

Gelöst wird diese Aufgabe durch das im Anspruch 1 angegebene Feldgerät.

Die wesentliche Idee der Erfindung besteht darin, das Feldgerät aus mehreren Modulen auszubauen, wobei ein Hauptmodul zur Signalerzeugung oder Signalverarbeitung dient. Dieses Hauptmodul weist mehrere Signalein- bzw. Signalausgänge für interne Signale auf. Die Signalein- bzw. Signalausgänge sind mit austauschbaren Zusatzmodulen verbunden, die jeweils Anschlüsse für externe Signale aufweisen. In den Zusatzmodulen sind elektrische Begrenzermittel für die externen Signale vorgesehen, die als Barriere gemäß einer vorgegebenen Zündschutzart ausgelegt sind. Durch den modularen Aufbau des Feldgerätes aus verschiedenen Modulen, die einzelnen jeweils den entsprechenden Zündschutzarten entsprechend, können verschiedene Varianten eines Feldgerätes einfach entwickelt und hergestellt werden.

Vorteilhafte Weiterentwicklungen der Erfindung sind in den Unteransprüchen angegeben.

Gemäß einer ersten Weiterentwicklung der Erfindung dient ein Modul, das ebenfalls als Barriere entsprechend der vorgegebenen Zündschutzart ausgelegt, zur Spannungsversorgung der weiteren Module..

Im Wesentlichen handelt es sich bei den Zusatzmodulen um Ein-/Ausgabeeinheiten.

Gemäß einer weiteren Weiterentwicklung der Erfindung ist das Versorgungsmodul ein DC/DC-Wandler.

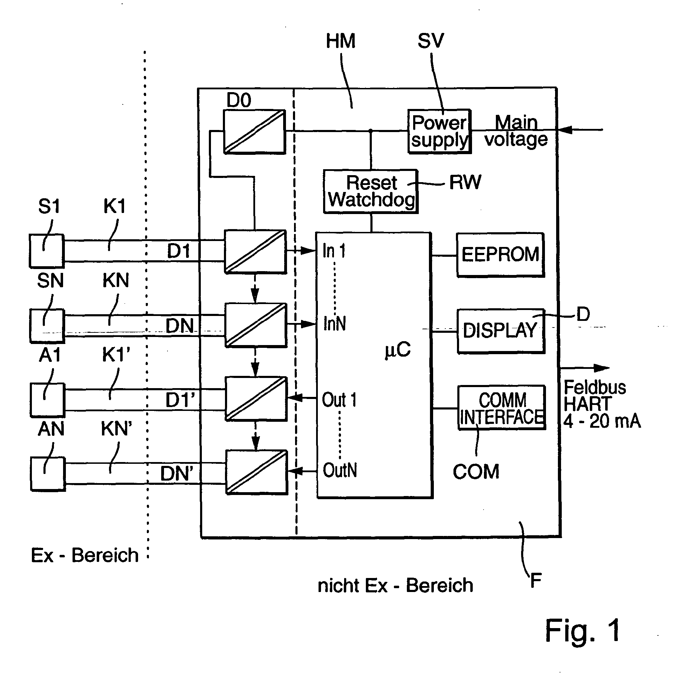

Nachfolgend ist die Erfindung anhand eines in der Figur dargestellten Blockschaltbilds eines erfindungsgemäßen Feldgerätes näher erläutert. Das Feldgerät F besteht im wesentlichen aus einem Mikrocontroller µC und mehreren an diesen angeschlossenen Ein-/Ausgabeeinheit D1-DN, D1'-DN' die als separate Module ausgeführt sind; N bzw. N' bezeichnet dabei eine natürliche Zahl 1, 2, 3 etc. Im Prinzip ist auch nur ein einziges Modul D1 denkbar.

Der Mikrocontroller µC ist mit einem externen Datenspeicher EEPROM verbunden. Zur Anzeige insbesondere von Messwerten, dient ein Display D. Über einen Kommunikationsinterface COM ist der Mikrocontroller µC mit einem externen Kommunikationssystem zum Beispiel einem Feldbus (HART, Profibus, Foundation Fieldbus etc.) oder mit einer 4-20mA Signalleitung verbunden. Zur Spannungsversorgung des Feldgeräts dient eine Versorgungseinheit SV, die extern gespeist wird. Der Mikrocontroller µC wird über einen üblichen Reset/Watchdog-Baustein RW versorgt.

Mikrocontroller µC, Datenspeicher EEPROM, Display D, Kommunikation Interface COM und Versorgungseinheit SV bilden im wesentlichen das Hauptmodul HM des Feldgerätes F.

Der Mikrocontroller µC weist mehrer Signaleingänge In1- InN und mehrere Signalausgänge Out1-OutN auf. Diese Ein- bzw. Ausgänge sind jeweils mit den Modulen D1-DN bzw. D1'-DN' verbunden, die Anschlüsse für externe Signale aufweisen.

Die Module D1-DN sind mit Sensoren z. B. Temperatursensoren, die sich in einer EX-Zone (EX-Bereich) befinden, verbunden. Die Module D1'-DN' sind mit Aktoren, z. B. Stellmotoren, die sich ebenfall in der Ex-Zone befinden, verbunden. Die Verbindung erfolgt jeweils über entsprechende Verbindungskabel K1-KN bzw. K1'-KN'.

Das Feldgerät F selbst ist im nicht Ex-Bereich angeordnet. Durch die Kabel K1-KN und K1'-KN' besteht jedoch eine Verbindung mit dem Ex-Bereich, deshalb ist eine Ex-Zulassung notwendig. Die Trennung von Ex-Bereich und nicht Ex-Bereich ist durch eine strichpunktierte Linie dargestellt. Die Doppellinie in den Modulen D1-DN bzw. D1'-DN' kennzeichnet die galvanischen Trennung zwischen diesen beiden Bereichen.

Die Module D1-DN bzw. D1'-DN' sind so ausgelegt, dass entsprechend den Anforderungen des Ex-Bereichs, ein Zündfunke in der Ex-Zone, der die Entzündung eines explosionsfähigen Gemisches in diesem Bereich bewirken könnte, nicht entstehen kann.

Eine Möglichkeit diesen Anforderungen zu genügen besteht darin, dass durch konstruktive Maßnahmen hinsichtlich der Anordnung der elektrischen und elektronischen Bauteile in den Modulen D1-DN bzw. D1'-DN', die Entstehung eines Zündfunkens vermieden wird. Teilweise werden in den einzelnen Modulen auch Barrieren eingesetzt, die bekanntermaßen aus Widerständen, Dioden und Sicherungen aufgebaut sind, um die im Ex-Bereich zur Verfügung stehende Energie zu begrenzen. Durch diese Maßnahmen kann ein Zündfunke vermieden werden.

Zur Spannungsversorgung der Module D1-DN bzw. D1'-DN' dient ein Modul D0, das als DC-DC-Wandler mit galvanischer Trennung ausgebildet ist.

In vorteilhafter Weise ist auch in den Modulen D1-DN bzw. D1'-DN', eine galvanische Isolation vorgesehen, die die externen Signale von den internen Signalen, die vom Mikrocontroller µC gesendet bzw. empfangen werden, trennt. D. h. die Signale des Ex-Bereichs sind vollständig galvanisch von den internen Signalen des Feldgerätes entkoppelt.

Durch den modularen Aufbau können so einfach unterschiedliche Typen eines Feldgerätes, die entsprechend einer vorgegebenen Zündschutzart ausgebildet sind realisiert werden. Die Zulassung der Geräte vereinfacht sich dadurch erheblich, da einzelne Module bereits zugelassen und getestet sind. Die Kosten für die Entwicklung eines neuen Gerätetyps werden dadurch verringert, gleichzeitig ist eine schnellere Markteinführung möglich. Durch die Mehrfachverwendung einzelner Module auch bei anderen Gerätetypen ergibt sich eine weitere Kosteneinsparung.

## Patentansprüche

1. Modulares Feldgerät für die Automatisierungstechnik mit einem Hauptmodul, das zur Signalerzeugung und/oder Signalverarbeitung dient und das mehrere Signalein- bzw. Signalausgängen für interne Signale aufweist, **dadurch gekennzeichnet, dass** die Signalein- bzw. Signalausgänge In1-InN bzw. Out1-OutN mit austauschbare Modulen D1-DN, D1 '- DN' verbunden sind, die Anschlüsse für externe Signale aufweisen, wobei in den Modulen D1-DN, D1' - DN' elektrische Begrenzermittel für die externen Signale vorgesehen sind, die als Barrieren gemäß einer vorgegebene Zündschutzart ausgelegt sind.

2. Modulares Feldgerät nach Anspruch 1, **dadurch gekennzeichnet, dass** zur Spannungsversorgung der Module D1-DN, D1'- DN' das mit einer extern versorgten Versorgungseinheit SV verbundene Modul D0 vorgesehen ist, das als Barriere entsprechend der vorgegebenen Zündschutzart ausgelegt ist.

3. Modulares Feldgerät für die Automatisierungstechnik nach einem der vorhergehenden Ansprüche, **dadurch gekennzeichnet, dass** die Module D1-DN, D1'- DN' Ein-/Ausgabeeinheiten sind.

4. Modulares Feldgerät nach einem der vorhergehenden Ansprüche, **dadurch gekennzeichnet, dass** das Hauptmodul HM eine Mikrocontroller µC aufweist.

5. Modulares Feldgerät nach einem der Ansprüche 2-4, **dadurch gekennzeichnet, dass** die Versorgungseinheit SV ein DC/DC-Wandler ist.

6. Modulares Feldgerät nach einem der vorhergehenden Ansprüche, **dadurch gekennzeichnet, dass** die externen Anschlüsse der Module z. B. Strom-/Impulseingänge bzw. ein Temperatur-/Widerstandseingänge sowie auch Spannungseingänge sind.

7. Modulares Feldgerät nach einem der vorhergehenden Ansprüche, **dadurch gekennzeichnet, dass** die Barrieren aus Widerständen, Dioden und Sicherungen aufgebaut sind.

8. Modulares Feldgerät nach einem der vorhergehenden Ansprüche, **dadurch gekennzeichnet, dass** in den Modulen D1-DN, D1'- DN' eine galvanische Isolation vorgesehen ist, die externe Signale von internen Signalen trennt.

9. Modulares Feldgerät nach einem der vorhergehenden Ansprüchen, **dadurch gekennzeichnet, dass** die Barriere der Zündschutzart Eigensicherheit Ex i entspricht.

10. Modulares Feldgerät nach einem der vorhergehenden Ansprüchen, **dadurch gekennzeichnet, dass** das Feldgerät ein Sensor ist. (Anmerkung: Das Feldgerät kann ein Sensor für jegliche physikalische Größe z.B. Druck, Durchfluss, Temperatur, etc. sein).
